# EUROPEAN PATENT SPECIFICATION

(11) **EP 3 661 004 B1**
(45) Date of publication and mention of the grant of the patent: **03.04.2024**
(21) Application number: 19207657.8
(22) Date of filing: 07.11.2019
(51) Int. Cl.: H02J 7/00, B25F 5/00

(54) **BATTERY UNIT, ADAPTER, ELECTRIC POWER TOOL SYSTEM, AND BATTERY CHARGER SYSTEM**
BATTERIEEINHEIT, ADAPTER, ELEKTROWERKZEUGMASCHINENSYSTEM UND BATTERIELADESYSTEM
UNITÉ DE BATTERIE, ADAPTATEUR, SYSTÈME D'OUTIL ÉLECTRIQUE ET SYSTÈME DE CHARGEUR DE BATTERIE

(30) Priority: 27.11.2018 JP 2018221668
(43) Date of publication of application: 03.06.2020
(73) Proprietor: Panasonic Intellectual Property Management Co., Ltd., Osaka-shi, Osaka 540-6207 (JP)
(72) Inventor: IKEDA, Masaki, Osaka-shi, Osaka 540-6207 (JP)
(74) Representative: Müller-Boré & Partner Patentanwälte PartG mbB

(56) References cited:
- EP-A1- 3 309 947
- EP-A1- 3 376 558
- US-A1- 2005 280 393
- US-A1- 2011 197 389
- US-A1- 2012 205 984

## Description

### Technical Field

The present invention generally relates to a battery unit, an adapter, an electric power tool system, and a battery charger system, and more particularly relates to a battery unit configured to be attached to an electric power tool body, an adapter, an electric power tool system, and a battery charger system.

### Background Art

A battery pack (battery unit) configured to be attached to an electric power tool has been known in the art (see, for example, JP 2007-143284 A).
US 2005/280393 A1 describes a handheld tool that has an attached position in which the tool is removably attached to a battery pack. The battery pack has an auxiliary battery and output terminals for outputting electricity from the auxiliary battery. The tool includes a load and a primary battery. Input terminals of the tool are configured to connect to the battery output terminals when the tool is in the attached position. A circuit is connected to the load, the primary battery and the input terminals. The circuit is configured to power the load solely from the primary battery when the housing is not in the attached position, and to power the load from both the primary and auxiliary batteries in series when the housing is in the attached position.
EP 3 309 947 A1 describes an electrical energy transmission apparatus. The electrical energy transmission apparatus includes an input component which is connected to a direct current (DC) energy storage component, an output component which comprises an alternating current (AC) device interface used to connect an AC device, and an adapter component which transfers electrical energy from the input component to the output component. The adapter component comprises a DC driving unit and an AC driving unit. The DC driving unit converts energy of the DC energy storage component into a DC power. The AC driving unit converts energy of the DC energy storage component into an AC power. At least one of the DC driving unit and the AC driving unit is connected to the AC device interface. The invention also discloses a control method for an electrical energy transmission apparatus, and a power supply system comprising an electrical energy transmission apparatus. The benefit of this invention is: an alternating current (AC) device interface of an electrical energy transmission apparatus selectively outputs a DC power and a AC power, reduce the cost for providing power to a AC device.
US 2011/197389 A1 describes an electric power tool that comprises a main body supporting a tool and an electric motor housed in the main body for driving the tool. A plurality of first battery interfaces is configured to removably receive or attach a plurality of first battery packs and to electrically connect the plurality of attached first battery packs in series with the electric motor. A plurality of indicators is configured to communicate information concerning the respective conditions of the plurality of attached first battery packs. The plurality of indicators is arranged such that all of the indicators are simultaneously viewable by a user of the electric power tool.
EP 3 376 558 A1 describes that in an upper cell unit 2146 and a lower cell unit 2147 comprising five battery cells, positive electrode terminals (2162, 2172) are set apart and aligned vertically, and negative electrode terminals (2167, 2177) are set apart and aligned vertically. When an electrical device body is rated at 36V, device-side terminals are in contact only at the upper terminals 2162, 2167, and short circuiting of the lower terminals 2172, 2177 is effected using a short bar 2059. When the electrical device body is rated at 18V, the upper and lower terminals (2162 and 2172, 2167 and 2177) are simultaneously made to contact the device-side terminals, and the upper cell unit 2146 and the lower cell unit 2147 assume a parallel connected state. Thus, it is possible to automatically switch the output voltage when a battery pack is mounted according to the difference in terminal shape on the electrical device body side.
US 2012/205984 A1 describes a power supply device that includes battery interfaces configured to removably receive at least three batteries and a connection circuit configured to electrically connect the at least three batteries to each other. The connection circuit is capable of connecting at least two batteries in parallel and connecting at least one other battery to the at least two parallel-connected batteries in series. According to this power supply device, it is possible to supply high power to an electric device by connecting the batteries in series. In addition, it is possible to supply almost all of the electric power stored in the batteries to the electric device, even if amount of the remaining electric power in each battery is substantially uneven.

The battery pack of JP 2007-143284 A includes an assembled battery formed by connecting a plurality of secondary batteries together, and a pair of power terminals respectively connected to a positive electrode and a negative electrode of the assembled battery. When attached to an electric power tool, the battery pack supplies power to the electric power tool.

The known battery pack is unable to adjust the amount of power supplied to the electric power tool, because its assembled battery has a constant output voltage and a constant capacity.

### Summary of Invention

In view of the foregoing background, it is therefore an object of the present invention to provide a battery unit, an adapter, an electric power tool system, and a battery charger system, all of which make the amount of power supplied to an electric power tool body adjustable. The present invention is defined by the features described in the independent claims. Preferred embodiments are defined in the dependent claims.

The battery unit of the present invention is designed to be removably attached to an electric power tool body. The battery unit includes a first battery module, a tool connecting section, a battery connecting section, and a connection circuit. The tool connecting section is electrically connected to the electric power tool body. To the battery connecting section, an additional battery, including a second battery module, is electrically connected. The connection circuit electrically connects the first battery module and the second battery module either electrically in series, or electrically in parallel, to each other with respect to the tool connecting section.

The adapter of the present invention includes the tool connecting section and the battery connecting section. The adapter further includes a battery pack connecting section to which a battery pack, including the first battery module, is electrically connected.

The electric power tool system of the present invention includes the battery unit described above and the electric power tool body.

The battery charger system of the present invention includes the battery unit described above and a charger for charging the first battery module.

### Brief Description of Drawings

FIG. 1 is a block diagram of an electric power tool system including a battery unit according to a first exemplary embodiment which is not within the scope of the invention but is included in this description because of illustrative purposes;
FIG. 2 is a perspective view illustrating the appearance of the electric power tool system;
FIG. 3A is a perspective view illustrating the appearance of the battery unit;
FIG. 3B is a plan view of the battery unit;
FIG. 4 is a block diagram of a battery charger system according to the first exemplary embodiment which is not within the scope of the invention but is included in this description because of illustrative purposes;
FIG. 5 is a perspective view illustrating the appearance of an electric power tool system according to a second exemplary embodiment which is not within the scope of the invention but is included in this description because of illustrative purposes;
FIG. 6 is a block diagram of the electric power tool system;
FIG. 7 is a block diagram of an electric power tool system according to a first variation of the second exemplary embodiment, variation falling within the scope of the invention; and
FIG. 8 is a block diagram of an electric power tool system according to a second variation of the second exemplary embodiment, variation which is not falling within the scope of the invention, but is included in this description because of illustrative purposes.

### Description of Embodiments

Note that embodiments and their variations to be described below are only examples and should not be construed as limiting. Rather, those embodiments and variations may be readily modified in various manners, depending on a design choice or any other factor. The scope of the invention is only defined by the appended claims.

### (First embodiment)

### (Overview)

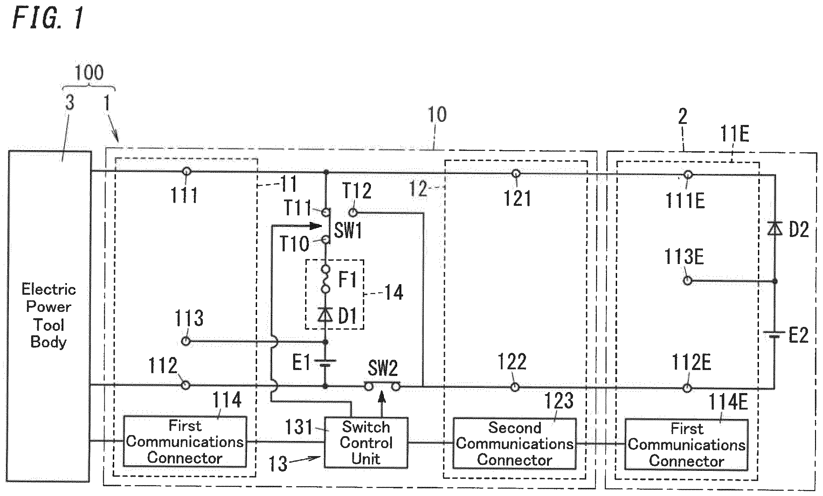

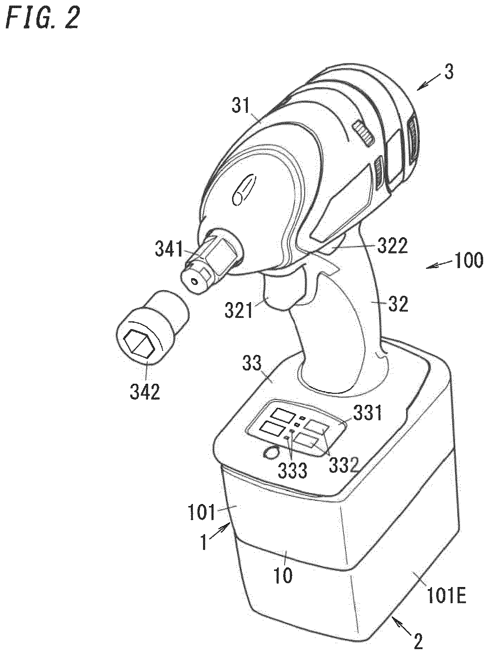

A circuit diagram of a battery unit 1 according to a first exemplary embodiment is shown in FIG. 1, and a general appearance of the battery unit 1 is shown in FIG. 2. This first exemplary embodiment is not part of the scope of the invention.

A battery unit 1 according to this embodiment is implemented as a battery pack 10 and is removably attached to an electric power tool body 3. When attached to the electric power tool body 3, the battery unit 1 functions as a power supply for supplying power to the electric power tool body 3.

The battery unit 1 is configured to receive an additional battery 2 attached thereto.

The battery unit 1 includes a first battery module E1, a tool connecting section 11, a battery connecting section 12, and a connection circuit 13. The tool connecting section 11 is electrically connected to the electric power tool body 3. To the battery connecting section 12, an additional battery 2, including a second battery module E2, is electrically connected. The connection circuit 13 electrically connects the first battery module E1 and the second battery module E2 either electrically in series, or electrically in parallel, to each other with respect to the tool connecting section 11.

The battery unit 1 according to this embodiment allows the combined output power of the first battery module E1 and the second battery module E2, included in the additional battery 2, to be supplied to the electric power tool body 3, thus making the amount of power supplied to the electric power tool body 3 adjustable.

### (Configuration)

Next, a detailed configuration for the battery unit 1 and electric power tool system 100 according to this embodiment will be described.

The electric power tool system 100 according to this embodiment includes the electric power tool body 3 and the battery unit 1.

In this embodiment, the electric power tool body 3 may be implemented as an electric impact wrench (see FIG. 2), for example. The electric power tool body 3 includes a cylindrical barrel 31, a grip 32 protruding radially from a circumferential surface of the barrel 31, and an attachment member 33 to which the battery unit 1 is attached.

A driving unit is housed in the barrel 31. The driving unit includes a motor, and is configured to perform rotational operation with power supplied from the battery unit 1 as a power source. An output shaft 341 protrudes from one axial end of the barrel 31. The output shaft 341 is configured to turn as the driving unit performs the rotational operation. A cylindrical socket 342 for fastening or loosening a fastening member (such as a nut or a bolt) is attached onto the output shaft 341. Turning the output shaft 341 by making the driving unit perform the rotational operation allows the electric power tool body 3 to perform the work of fastening or loosening the fastening member.

The grip 32 is a portion to be gripped by the worker who is performing the work, and is provided with a trigger switch 321 and a rotational direction inverting switch 322. The trigger switch 321 is a switch for controlling the ON/OFF states of the rotational operation by the driving unit and allows the worker to adjust the number of revolutions of the driving unit by changing the depth of the trigger switch 321 pressed. The rotational direction inverting switch 322 is a switch for switching the rotational direction of the output shaft 341 from the clockwise direction into the counterclockwise direction, and vice versa. The attachment member 33 is provided at the other end, opposite from the barrel 31, of the grip 32.

The attachment member 33 is formed in the shape of a compressed rectangular parallelepiped, and the battery unit 1 is attached to one side thereof opposite from the grip 32. Attaching the battery unit 1 to the attachment member 33 allows power to be supplied from the battery unit 1 to the driving unit and other units.

The attachment member 33 is also provided with a control panel 331. The control panel 331 may include a plurality of press button switches 332 and a plurality of LEDs (light-emitting diodes) 333, for example, which allow the worker to enter various types of settings for, and confirm the state of, the electric power tool body 3. For example, by operating the control panel 331 (press button switches 332), the worker is allowed to change the operation mode of the electric power tool body 3.

The battery unit 1 according to this embodiment is implemented as a battery pack 10. The battery pack 10 is readily attachable to, and removable from, the attachment member 33 of the electric power tool body 3. The battery pack 10 includes a housing 101. The housing 101 houses the first battery module E1 and includes the tool connecting section 11 and the battery connecting section 12.

The first battery module E1 is a so-called "assembled battery" and includes a plurality of secondary batteries, each of which serves as a cell. The secondary batteries may be lithium-ion batteries, for example. In the first battery module E1, a plurality of secondary batteries are connected together in series and in parallel according to the specifications including the rated voltage and the rated capacity. For example, lithium-ion batteries may have a rated voltage of 3.6 V. If the rated voltage of the first battery module E1 is 18 V, then five lithium-ion batteries are connected together in series. In addition, according to the rated capacity of the first battery module E1, a plurality of (e.g., two or three) series circuits, each consisting of five lithium-ion batteries connected together in series, are connected together in parallel. The first battery module E1 is housed in the housing 101.

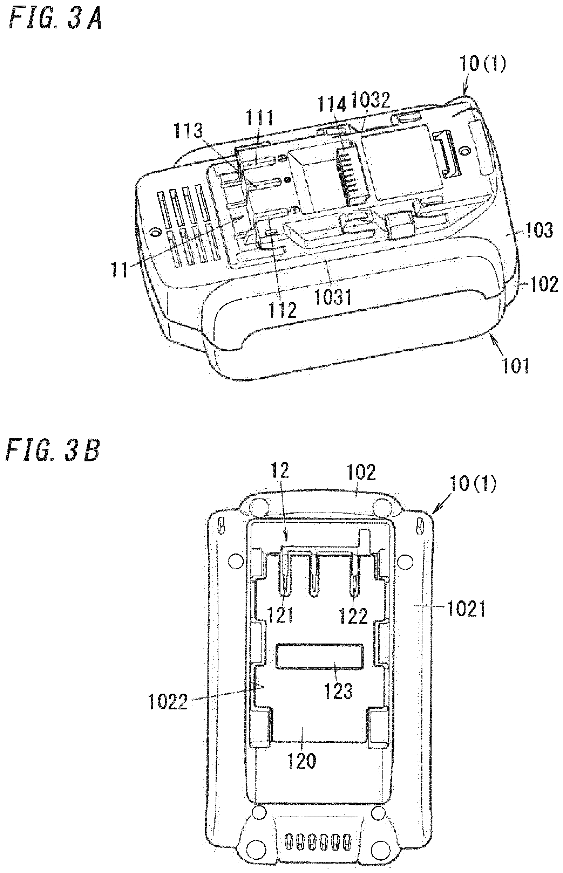

The housing 101 includes a body 102 and a cover 103 coupled to the body 102 as shown in FIGS. 3A and 3B. The body 102 is formed in the shape of a box with one side, facing the cover 103, open. The body 102 houses the first battery module E1. The cover 103 is also formed in the shape of a box with one side, facing the body 102, open.

The cover 103 includes a raised stage 1032, protruding from the other surface 1031 thereof facing away from the body 102. The raised stage 1032 has a compressed rectangular parallelepiped shape. The body 102 is a molded product of a synthetic resin. The body 102 may be made of an ABS resin, for example. The body 102 has electrical insulation properties. The cover 103 is also a molded product of a synthetic resin. The cover 103 may also be made of an ABS resin, for example. The cover 103 also has electrical insulation properties.

The raised stage 1032 is provided with the tool connecting section 11 (see FIG. 3A). The tool connecting section 11 includes, as a plurality of (e.g., three in this embodiment) connection terminals for use to electrically connect the battery unit 1 to the electric power tool body 3, a positive electrode terminal 111, a negative electrode terminal 112, and another positive electrode terminal 113. As shown in FIG. 1, the positive electrode terminals 111 and 113 are connected to a positive electrode of the first battery module E1. Specifically, the positive electrode terminal 111 is connected to the positive electrode of the first battery module E1 via a switch SW1 and a protection circuit 14. The negative electrode terminal 112 is connected to the negative electrode of the first battery module E1. This battery unit 1 uses the positive electrode terminal 111 and the negative electrode terminal 112 to discharge electricity from the first battery module E1.

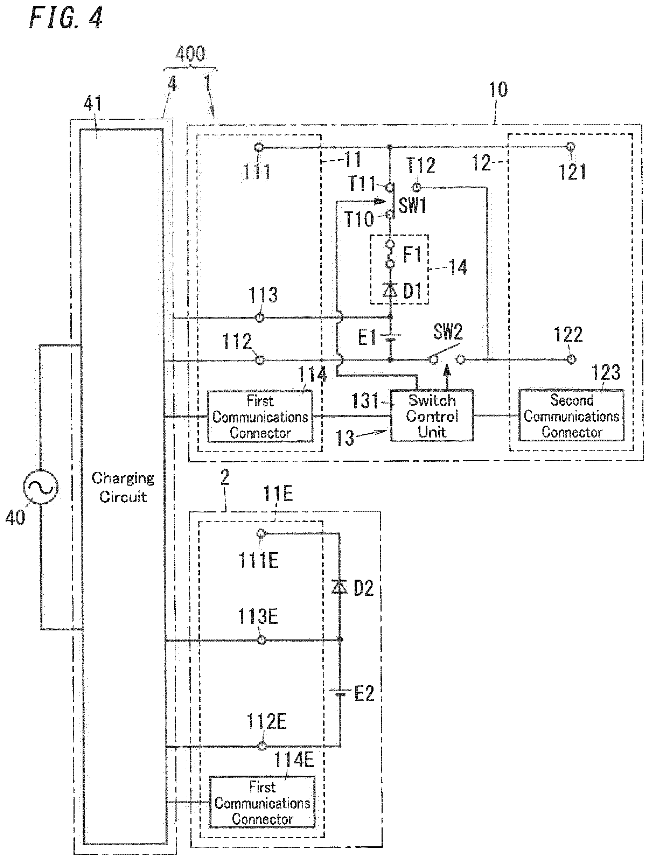

In addition, the tool connecting section 11 is also used to electrically connect the battery unit 1 to a charger 4 (see FIG. 4). The battery unit 1 uses the positive electrode terminal 113 and the negative electrode terminal 112 to charge the first battery module E1 with the charger 4.

The raised stage 1032 of the housing 101 further includes a first communications connector 114. The first communications connector 114 is a connector for use as an interface for communicating with the electric power tool body 3 and the charger 4. The first communications connector 114 may be used to output battery information to the electric power tool body 3 and the charger 4. Examples of the battery information include temperature information, rated voltage information, and other pieces of information about the batteries. The temperature information is information about the temperature of the first battery module E1. The rated voltage information is information about the rated voltage of the first battery module E1.

The additional battery 2 is readily attachable to, and removable from, the battery unit 1 (battery pack 10). The body 102 of the housing 101 includes a battery connecting section 12, which is provided on the other surface 1021, opposite from the cover 103, of the body 102. The battery connecting section 12 is used to electrically connect or disconnect the additional battery 2 to/from the battery unit 1.

In this embodiment, the additional battery 2 has the same configuration as the battery unit 1 (battery pack 10), except that the battery connecting section 12 of the battery unit 1 is omitted from the additional battery 2 of this embodiment. In the following description, any constituent element of the additional battery 2, having the same function as a counterpart of the battery unit 1 according to this embodiment, will be designated by, in combination, the same reference numeral as that counterpart's and the suffix "E", and a detailed description thereof will be omitted herein.

The additional battery 2 includes a housing 101E. The housing 101E houses the second battery module E2. The second battery module E2 is a so-called "assembled battery" and includes a plurality of secondary batteries, each of which serves as a cell. The secondary batteries may be lithium-ion batteries, for example. In the second battery module E2, a plurality of secondary batteries are connected together in series and in parallel according to the specifications including the rated voltage and the rated capacity. The rated voltage, rated capacity, and other specifications of the second battery module E2 may be the same as, or different from, those of the first battery module E1. The positive electrode of the second battery module E2 is connected to the positive electrode terminals 111E and 113E. The negative electrode of the second battery module E2 is connected to the negative electrode terminal 112E.

The additional battery 2, as well as the battery unit 1 (battery pack 10), includes a tool connecting section 11E. The tool connecting section 11E includes the positive electrode terminal 111E, the negative electrode terminal 112E, and the positive electrode terminal 113E. Therefore, the additional battery 2 is attachable directly to the electric power tool body 3. In addition, the additional battery 2 alone also serves as a power supply for the electric power tool body 3.

The battery connecting section 12 is formed on one surface 1021 of the body 102 of the housing 101 and has a recess 1022 to house the raised stage of the additional battery 2. The recess 1022 has a rectangular opening. One longitudinal end of the recess 1022 is open.

The battery connecting section 12 further includes a positive electrode input terminal 121 and a negative electrode input terminal 122 to be respectively connected to the positive electrode terminal 111E and negative electrode terminal 112E that the tool connecting section 11E of the additional battery 2 has. The negative electrode input terminal 122 is connected to the first battery module E1 via the connection circuit 13. A configuration for the connection circuit 13 will be described later.

In addition, the battery connecting section 12 further includes a second communications connector 123 connectible to the first communications connector 114E of the additional battery 2.

Attaching the additional battery 2 to the battery unit 1 makes the positive electrode input terminal 121 and negative electrode input terminal 122 of the battery unit 1 respectively electrically connected to the positive electrode terminal 111E and negative electrode terminal 112E of the additional battery 2. In addition, attaching the additional battery 2 to the battery unit 1 makes the second communications connector 123 of the battery unit 1 electrically connected to the first communications connector 114E of the additional battery 2.

To protect the battery connecting section 12, the battery unit 1 further includes a protection plate 120. The protection plate 120 closes the opening of the recess 1022 with the respective upper surfaces of the positive electrode input terminal 121, negative electrode input terminal 122, and second communications connector 123 exposed. The protection plate 120 is supported by a coil spring provided on the back surface of the protection plate 120. Therefore, to attach the additional battery 2 to the battery unit 1, the raised stage of the additional battery 2 needs to be inserted into the recess 1022 of the battery unit 1 to overcome the spring force applied by the coil spring.

In the battery unit 1 according to this embodiment, the connection circuit 13 and the protection circuit 14 are provided inside the housing 101. The connection circuit 13 and the protection circuit 14 will be described with reference to FIG. 1.

The connection circuit 13 is configured to electrically connect the first battery module E1 and the second battery module E2 either electrically in series, or electrically in parallel, to each other, with respect to the tool connecting section 11. Specifically, the connection circuit 13 electrically connects the first battery module E1 and the second battery module E2 either electrically in series or electrically in parallel between the positive electrode terminal 111 and negative electrode terminal 112 of the tool connecting section 11. In this embodiment, the connection circuit 13 is configured to change the mode of connection between the first battery module E1 and the second battery module E2 from series connection to parallel connection, and vice versa.

The connection circuit 13 includes the switch SW1, another switch SW2, and a switch control unit 131.

The switch SW1 is a c-contact switch, and includes a common terminal T10, a first terminal T11, and a second terminal T12. The switch SW1 electrically connects either the first terminal T11 or the second terminal T12 to the common terminal T10. Note that the "terminal" as used herein does not have to be a part to which an electric wire or any other cable is connected, but may also refer to a lead of an electronic component or a portion of a conductor included in a circuit board. The switch SW1 may be implemented as a mechanical switch or configured to include a plurality of semiconductor switching elements such as metal-oxide semiconductor field-effect transistors (MOSFETs), whichever is appropriate. In the latter case, a first switching element is connected between the common terminal T10 and the first terminal T11. A second switching element is connected between the common terminal T10 and the second terminal T12. Either the first switching element or the second switching element is turned ON.

In the switch SW1, a state where the common terminal T10 and the first terminal T11 are electrically conductive with each other will be hereinafter referred to as a "first state," and a state where the common terminal T10 and the second terminal T12 are electrically conductive with each other will be hereinafter referred to as a "second state."

The common terminal T10 is electrically connected to the positive electrode of the first battery module E1 via the protection circuit 14. The protection circuit 14 will be described in detail later. The first terminal T11 is electrically connected to the positive electrode terminal 111 of the tool connecting section 11 and the positive electrode input terminal 121 of the battery connecting section 12. The second terminal T12 is electrically connected to the negative electrode input terminal 122 of the battery connecting section 12.

The switch SW2 is connected between the negative electrode of the first battery module E1, the negative electrode terminal 112 of the tool connecting section 11, and the negative electrode input terminal 122 of the battery connecting section 12. One terminal of the switch SW2 is electrically connected to the negative electrode of the first battery module E1 and the negative electrode terminal 112 of the tool connecting section 11. The other terminal of the switch SW2 is electrically connected to the negative electrode input terminal 122 of the battery connecting section 12. The switch SW2 may be implemented as a mechanical switch or a semiconductor switching element such as a MOSFET.

The switch control unit 131 controls the switches SW1 and SW2. The switch control unit 131 is implemented as a microcontroller (or microcomputer) including a memory and a processor, for example. The processor performs various functions by executing a program stored in the memory. The program may be stored in advance in the memory or may also be distributed after having been stored in a non-transitory storage medium such as a memory card or may be downloaded via a telecommunications line.

The switch control unit 131 controls the switch SW1 and the switch SW2 to have the first battery module E1 and the second battery module E2 connected either in series or in parallel. The switch control unit 131 is electrically connected to the first communications connector 114, and controls the switches SW1 and SW2 in accordance with a control signal received from the electric power tool body 3 via the first communications connector 114. In the electric power tool body 3, the control panel 331 receives an operating command indicating the mode of electrical connection (i.e., either series connection or parallel connection) between the first battery module E1 and the second battery module E2. The electric power tool body 3 outputs a control signal to the battery unit 1 in accordance with the operating command received by the control panel 331. The control signal includes an instruction about the mode of electrical connection (i.e., either series connection or parallel connection) between the first battery module E1 and the second battery module E2.

To connect the first battery module E1 and the second battery module E2 in parallel, the switch control unit 131 turns the switch SW1 to a first state (where the common terminal T10 and the first terminal T11 are electrically conductive with each other) and turns the switch SW2 ON. This makes the negative electrode terminal 112E of the additional battery 2 electrically connected to the negative electrode of the first battery module E1 via the switch SW2. Thus, the first battery module E1 and the second battery module E2 are connected in parallel between the positive electrode terminal 111 and negative electrode terminal 112 of the tool connecting section 11. When the first battery module E1 and the second battery module E2 are connected in parallel, the respective capacities of the first battery module E1 and second battery module E2 are added together. This increases the amount of power supplied to the electric power tool body 3 compared to a situation where the battery module (battery pack 10) alone supplies power to the electric power tool body 3, thus extending the operating duration of the electric power tool body 3. In addition, connecting the first battery module E1 and second battery module E2 in parallel increases the amount of current supplied to the electric power tool body 3, compared to a situation where the battery module (battery pack 10) alone supplies power to the electric power tool body 3.

To connect the first battery module E1 and the second battery module E2 in series, the switch control unit 131 turns the switch SW1 to a second state (where the common terminal T10 and the second terminal T12 are electrically conductive with each other) and turns the switch SW2 OFF. This makes the negative electrode terminal 112E of the additional battery 2 electrically connected to the positive electrode of the first battery module E1 via the switch SW1. Thus, the first battery module E1 and the second battery module E2 are connected together in series between the positive electrode terminal 111 and negative electrode terminal 112 of the tool connecting section 11. When the first battery module E1 and the second battery module E2 are connected together in series, the respective output voltages of the first battery module E1 and second battery module E2 (i.e., voltages between both terminals of theirs) are added together. This increases the amount of power supplied (more specifically, the voltage applied) to the electric power tool body 3 compared to a situation where the battery unit 1 (battery pack 10) alone supplies power to the electric power tool body 3.

As can be seen from the foregoing description, the battery unit 1 according to this embodiment is able to adjust (specifically, increase) the amount of power supplied to the electric power tool body 3 when the additional battery 2 is attached thereto. This allows the user to attach the battery unit 1 and the additional battery 2 in combination as needed to the electric power tool body 3 according to the specification of the electric power tool body 3, even without providing a suitable battery pack for each individual electric power tool body 3. This provides a battery unit 1 with improved user friendliness.

In addition, the switch control unit 131 maintains, in a normal state, the switch SW1 in the first state (i.e., the state where the common terminal T10 and the first terminal T11 are electrically conductive with each other) and keeps the switch SW2 OFF. As used herein, the "normal state" refers to a state where the switch control unit 131 receives no control signal from the electric power tool body 3. That is to say, on receiving a control signal from the electric power tool body 3, the switch control unit 131 electrically connects the first battery module E1 and the battery connecting section 12 together. In other words, while receiving no control signals from the electric power tool body 3, the switch control unit 131 electrically disconnects the first battery module E1 and the battery connecting section 12 from each other. Therefore, in such a situation, just attaching the additional battery 2 to the battery unit 1 does not automatically make the first battery module E1 and the second battery module E2 electrically connected to each other.

Furthermore, according to this embodiment, the switch control unit 131 serves as a decision unit for determining, based on information about the respective voltages of the first battery module E1 and the second battery module E2 (in this embodiment, at least a fragment of the battery information), whether or not the first battery module E1 and the second battery module E2 may be electrically connected together. The switch control unit 131 controls the switches SW1 and SW2 in accordance with the control signal from the electric power tool body 3 and the battery information of the additional battery 2 received via the second communications connector 123. That is to say, the connection circuit 13 according to this embodiment determines, based on the battery information of the additional battery 2, whether or not the first battery module E1 and the second battery module E2 may be electrically connected together. On determining that the first battery module E1 and the second battery module E2 may be electrically connected together, the connection circuit 13 electrically connects the first battery module E1 and the second battery module E2 either electrically in series or electrically in parallel between the positive electrode terminal 111 and negative electrode terminal 112 of the tool connecting section 11.

When a first battery module E1 and a second battery module E2 that have mutually different rated voltages are connected together in parallel, power is supplied from only the battery module with the higher rated voltage to the electric power tool body 3. Consequently, in that case, the capacities of the first battery module E1 and the second battery module E2 are not added together. In addition, some amount of current could flow from the battery module with the higher rated voltage to the battery module with the lower rated voltage.

Suppose the switch control unit 131 has received a control signal including an instruction that the first battery module E1 and the second battery module E2 should be connected together in parallel. In that case, the switch control unit 131 compares the respective rated voltage values of the first battery module E1 and the second battery module E2 with each other. When finding the difference between the respective rated voltage values of the first battery module E1 and second battery module E2 less than a threshold value, the switch control unit 131 turns the switch SW2 ON. That is to say, the switch control unit 131 connects the first battery module E1 and the second battery module E2 in parallel. On the other hand, when finding the difference between the respective rated voltage values of the first battery module E1 and the second battery module E2 equal to or greater than the threshold value, the switch control unit 131 does not turn the switch SW2 ON. That is to say, the switch control unit 131 does not connect the first battery module E1 and the second battery module E2 together in parallel. This reduces the chances of the first battery module E1 and second battery module E2 with mutually different rated voltages being connected together in parallel.

Optionally, the switch control unit 131 may compare the output voltage (i.e., the voltage between two terminals) of the first battery module E1 with the output voltage (i.e., the voltage between two terminals) of the second battery module E2. In that case, when finding the difference between the respective output voltage values of the first battery module E1 and second battery module E2 equal to or greater than a threshold value, the switch control unit 131 does not connect the first battery module E1 and the second battery module E2 together in parallel. Thus, even if the first battery module E1 and the second battery module E2 have the same rated voltage but when the output voltage of one battery module has decreased to a level lower than the rated voltage, the first battery module E1 and the second battery module E2 are not connected together in parallel.

Also, if the first battery module E1 and the second battery module E2 are connected together in series, a voltage greater than the upper limit input voltage of the electric power tool body 3 could be applied to the electric power tool body 3.

Suppose the switch control unit 131 has received a control signal including an instruction that the first battery module E1 and the second battery module E2 should be connected together in series. The control signal also includes information indicating the upper limit input voltage value of the electric power tool body 3. In that case, the switch control unit 131 compares the sum of the respective rated voltages of the first battery module E1 and the second battery module E2 with the upper limit input voltage value of the electric power tool body 3. Suppose the sum of the respective rated voltage values of the first battery module E1 and second battery module E2 is equal to or less than the upper limit input voltage value of the electric power tool body 3. In that case, the switch control unit 131 turns the switch SW1 to the second state. That is to say, the switch control unit 131 connects the first battery module E1 and the second battery module E2 together in series. On the other hand, when finding the sum of the respective rated voltage values of the first battery module E1 and second battery module E2 greater than the upper limit input voltage value of the electric power tool body 3, the switch control unit 131 does not turn the switch SW1 to the second state. That is to say, the switch control unit 131 does not connect the first battery module E1 and the second battery module E2 together in series. This reduces the chances of a voltage greater than the upper limit input voltage value of the electric power tool body 3 being applied to the electric power tool body 3.

Also, when determining that the first battery module E1 and the second battery module E2 may not be electrically connected together (either in series or in parallel), the switch control unit 131 makes the electric power tool body 3 indicate an error. The error may be indicated either by emitting an error sound or displaying an error message. This allows the user to learn that the first battery module E1 and the second battery module E2 may not be electrically connected together.

Next, the protection circuit 14 will be described. The protection circuit 14 is configured to reduce the chances of an overcurrent flowing between the first battery module E1 and the second battery module E2. As used herein, the "overcurrent" refers to a current having a larger value than the rated current value of the first battery module E1 and the second battery module E2.

The protection circuit 14 is electrically connected between the common terminal (reference terminal) T10 of the switch (first switch) SW1 and the positive electrode of the first battery module E1. The protection circuit 14 includes a fuse F1 and a diode D1, which are connected together in series between the common terminal T10 of the switch SW1 and the positive electrode of the first battery module E1.

The fuse F1 is configured to cut off the current path when an overcurrent flows. The cutoff of the current path by the fuse F1 reduces the chances of an overcurrent flowing between the first battery module E1 and the second battery module E2. Optionally, the fuse F1 may be replaced with a current limiter such as a positive temperature coefficient (PTC) thermistor. The current limiter is configured to have an increased resistance value when a current flows in a predetermined amount or more. The heat generated by the current limiter by itself causes an increase in resistance value, thus reducing the chances of an overcurrent flowing between the first battery module E1 and the second battery module E2.

The diode D1 has its anode electrically connected to the positive electrode of the first battery module E1 and its cathode electrically connected to the common terminal T10 of the switch SW1 via the fuse F1. When the first battery module E1 and the second battery module E2 are connected together in parallel, the diode D 1 reduces the chances of a current flowing from the second battery module E2 toward the first battery module E1. That is to say, the diode D1 reduces a reverse current flowing toward the first battery module E1.

The additional battery 2, as well as the battery unit 1 (battery pack 10), includes a diode D2. The diode D2 has its anode electrically connected to the positive electrode of the second battery module E2 and its cathode electrically connected to the positive electrode terminal 111E. When the first battery module E1 and the second battery module E2 are connected together in parallel, the diode D2 reduces the chances of a current flowing from the first battery module E1 toward the second battery module E2. That is to say, the diode D2 reduces a reverse current flowing toward the second battery module E2.

Next, a battery charger system 400 according to this embodiment will be described with reference to FIG. 4.

The battery charger system 400 includes the battery unit 1 and a charger 4.

The charger 4 includes a charging circuit 41. The charger 4 includes a plurality of (e.g., two) connection ports, to each of which either the battery unit 1 (battery pack 10) or the additional battery 2 is attachable. This allows the battery unit 1 (battery pack 10) and the additional battery 2 to be both attached to the charger 4 at a time.

When the battery unit 1 (battery pack 10) is attached to one of the connection ports, the charging circuit 41 is electrically connected to the first battery module E1 via the positive electrode terminal 113 and negative electrode terminal 112 of the tool connecting section 11. On the other hand, when the additional battery 2 is attached to one of the connection ports, the charging circuit 41 is electrically connected to the second battery module E2 via the positive electrode terminal 113E and negative electrode terminal 112E of the tool connecting section 11E.

The charging circuit 41 charges the first battery module E1 and the second battery module E2 with the power supplied from a utility power supply 40.

The positive electrode terminal 113 of the battery unit 1 (battery pack 10) is electrically connected to a connection point between the anode of the diode D1 and the positive electrode of the first battery module E1. That is to say, the positive electrode terminal 113 is electrically connected to the first battery module E1 not via the diode D1. Therefore, since the diode D1 is not included in the charging path, the charging circuit 41 is able to charge the first battery module E1.

In addition, the positive electrode terminal 113E of the additional battery 2 is electrically connected to a connection point between the anode of the diode D2 and the positive electrode of the second battery module E2. That is to say, the positive electrode terminal 113E is electrically connected to the second battery module E2 not via the diode D2. Therefore, since the diode D2 is not included in the charging path, the charging circuit 41 is able to charge the second battery module E2.

Suppose the first battery module E1 of the battery unit 1 (battery pack 10) attached to the charger 4 and the second battery module E2 of the additional battery 2 have the same rated voltage. In that case, the charging circuit 41 charges the first battery module E1 and the second battery module E2 so as to reduce the difference in output voltage (i.e., the voltage between two terminals) between the first battery module E1 and the second battery module E2. This reduces, when the first battery module E1 and the second battery module E2 are connected together in parallel, the difference in output voltage between the first battery module E1 and the second battery module E2.

### (Variations)

Next, variations of the battery unit 1 according to this embodiment will be described.

In the example described above, the fuse F1 of the protection circuit 14 is electrically connected between the switch SW1 and the first battery module E1. However, this is only an example and should not be construed as limiting. Alternatively, the fuse F1 may be electrically connected between the first terminal T11 of the switch SW1 and the positive electrode input terminal 121 of the battery connecting section 12. Even so, the fuse F1 also reduces, when the first battery module E1 and the second battery module E2 are connected together in parallel, the chances of an overcurrent flowing between the first battery module E1 and the second battery module E2.

Also, in the example described above, the battery connecting section 12 provided for the battery unit 1 (battery pack 10) is omitted from the additional battery 2. However, this is only an example and should not be construed as limiting. Alternatively, the additional battery 2 may also include the battery connecting section 12. That is to say, the additional battery 2 may have the same configuration as the battery unit 1 (battery pack 10). In that case, another additional battery 2 may be further attached to the additional battery 2, and therefore, three or more battery packs (consisting of one battery unit 1 and two or more additional batteries 2) that are coupled together may be attached to the electric power tool body 3.

Furthermore, in the example described above, the switch control unit 131 of the connection circuit 13 is configured to electrically connect the first battery module E1 and the second battery module E2 together (either in series or in parallel) in accordance with a control signal from the electric power tool body 3. However, this is only an example and should not be construed as limiting. Alternatively, the switch control unit 131 may also be configured to electrically connect the first battery module E1 and the second battery module E2 together in response to a turn of an operating switch (such as a slide switch) provided for the battery unit 1 (battery pack 10).

Moreover, in the example described above, the connection circuit 13 is configured to change the mode of connection between the first battery module E1 and the second battery module E2 from series connection to parallel connection, and vice versa. However, this is only an example and should not be construed as limiting. Alternatively, the connection circuit 13 may also be configured to connect the first battery module E1 and the second battery module E2 together either in series or in parallel.

Also, in the example described above, the additional battery 2 is configured to be attachable to the electric power tool body 3. However, this is only an example and should not be construed as limiting. Alternatively, the additional battery 2 may be a dedicated battery connectible to only the battery unit 1. Still alternatively, the additional battery 2 may also be a general-purpose battery connectible to not only the battery unit 1 and the electric power tool body 3 but also different types of devices as well.

Furthermore, in the example described above, the electric power tool body 3 is implemented as an impact wrench. However, this is only an example and should not be construed as limiting. Alternatively, the electric power tool body 3 may also be implemented as any other electric power tool such as an electric screwdriver, an electric drill, or a grinder.

### (Second embodiment)

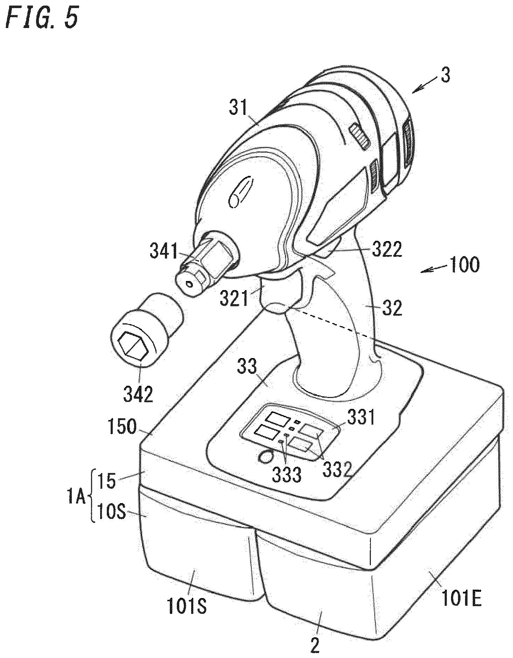

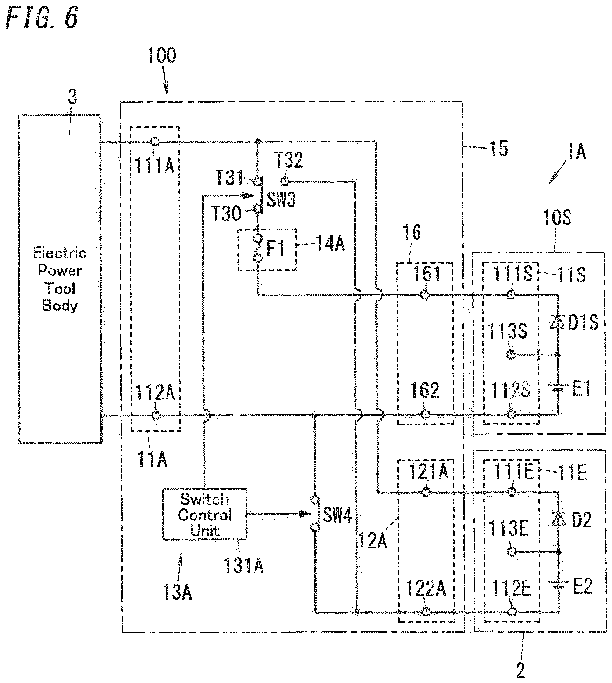

Next, a battery unit 1A according to a second exemplary embodiment will be described with reference to FIGS. 5 and 6. This second exemplary embodiment is not part of the scope of the invention.

The battery unit 1A according to this embodiment includes a battery pack 10S and an adapter 15.

The battery pack 10S according to the second embodiment has basically the same configuration as the battery pack 10 according to the first embodiment. Nevertheless, the battery connecting section 12, the connection circuit 13, and other constituent elements are omitted from the battery pack 10S according to this embodiment. In the following description, any constituent element of the battery pack 10S, having the same function as a counterpart of the battery pack 10 according to the first embodiment, will be designated by, in combination, the same reference numeral as that counterpart's and the suffix "S", and a detailed description thereof will be omitted herein.

The battery pack 10S includes the first battery module E1. Specifically, the battery pack 10S houses the first battery module E1 in its housing 101S. The battery pack 10S further includes a tool connecting section 11S. This makes the battery pack 10S attachable to the electric power tool body 3. The battery pack 10S alone is also able to serve as a power supply for the electric power tool body 3. Optionally, the battery pack 10S may have the same configuration as the battery pack 10 (battery unit 1) according to the first embodiment. That is to say, the battery pack 10S may include the battery connecting section 12, the connection circuit 13, and other constituent elements.

The adapter 15 is used to electrically connect both the battery pack 10S and the additional battery 2 to the electric power tool body 3. The adapter 15 includes a tool connecting section 11A, a battery connecting section 12A, and a battery pack connecting section 16. The adapter 15 further includes a housing 150.

The housing 150 has a compressed rectangular parallelepiped shape. The housing 150 is a molded product of a synthetic resin. The housing 150 may be made of an ABS resin, for example. The housing 150 has electrical insulation properties. In the housing 150, the tool connecting section 11A is provided on a first surface thereof facing the electric power tool body 3. Moreover, in the housing, the battery connecting section 12A and the battery pack connecting section 16 are provided on a second surface opposite from the electric power tool body 3. In addition, a connection circuit 13A and a protection circuit 14A are further provided inside the housing 150.

The tool connecting section 11A includes a positive electrode terminal 111A and a negative electrode terminal 112A. The tool connecting section 11A has the same configuration as the tool connecting section 11 according to the first embodiment, and therefore, a detailed description thereof will be omitted herein.

The battery pack connecting section 16 has the same configuration as the battery connecting section 12 according to the first embodiment, and includes a positive electrode input terminal 161 and a negative electrode input terminal 162. Attaching the battery pack 10S to the adapter 15 makes the positive electrode input terminal 161 and the negative electrode input terminal 162 respectively electrically connected to the positive electrode terminal 111S and negative electrode terminal 112S of the tool connecting section 11 S of the battery pack 10S.

The battery connecting section 12A has the same configuration as the battery connecting section 12 according to the first embodiment, and includes a positive electrode input terminal 121A and a negative electrode input terminal 122A. Attaching the additional battery 2 to the adapter 15 makes the positive electrode input terminal 121A and the negative electrode input terminal 122A respectively electrically connected to the positive electrode terminal 111E and negative electrode terminal 112E of the tool connecting section 11E of the additional battery 2.

Note that the communications connectors that the tool connecting sections 11A, 11S, and 11E, the battery connecting section 12A, and the battery pack connecting section 16 include are not shown in FIG. 6.

The adapter 15 includes the connection circuit 13A and the protection circuit 14A, which are provided inside the housing 150.

The connection circuit 13A includes a switch SW3, a switch SW4, and a switch control unit 131A.

The switch SW3 includes a common terminal T30, a first terminal T31, and a second terminal T32. The common terminal T30 is electrically connected to the positive electrode input terminal 161 of the battery pack connecting section 16 via the protection circuit 14A. The first terminal T31 is electrically connected to the positive electrode terminal 111A of the tool connecting section 11A and the positive electrode input terminal 121A of the battery connecting section 12A. The second terminal T32 is electrically connected to the negative electrode input terminal 122A of the battery connecting section 12.

The switch SW4 has one terminal thereof electrically connected to the negative electrode terminal 112A of the tool connecting section 11A and the negative electrode input terminal 162 of the battery pack connecting section 16, and has the other terminal thereof connected to the negative electrode input terminal 122A of the battery connecting section 12A.

In this embodiment, the protection circuit 14A includes a fuse F1. The battery pack 10S includes a reverse-blocking diode D1S between the positive electrode terminal 111S and the positive electrode of the first battery module E1.

The switch control unit 131A receives a control signal from the electric power tool body 3 via a communications connector that the tool connecting section 11A has. The switch control unit 131A also receives battery information of the battery pack 10S via a communications connector that the battery pack connecting section 16 has. The switch control unit 131A further receives battery information of the additional battery 2 via a communications connector that the battery connecting section 12A has. The switch control unit 131A controls the switches SW3 and SW4 in accordance with the control signal received from the electric power tool body 3, the battery information of the battery pack 10, and the battery information of the additional battery 2. The switch control unit 131A determines, in the same way as in the first embodiment, whether or not the first battery module E1 and the second battery module E2 may be electrically connected together, and a detailed description thereof will be omitted herein.

To connect the first battery module E1 and the second battery module E2 together in parallel, the switch control unit 131A turns the switch SW3 to a first state (where the common terminal T30 and the first terminal T31 are electrically conductive with each other) and turns the switch SW4 ON. This makes the first battery module E1 and the second battery module E2 connected together in parallel between the positive electrode terminal 111A and negative electrode terminal 112A of the tool connecting section 11A. This increases the amount of power supplied to the electric power tool body 3 compared to a situation where the battery pack 10S alone supplies power to the electric power tool body 3, thus extending the operating duration of the electric power tool body 3. In addition, connecting the first battery module E1 and second battery module E2 in parallel increases the amount of current supplied to the electric power tool body 3, compared to a situation where the battery pack 10S alone supplies power to the electric power tool body 3.

To connect the first battery module E1 and the second battery module E2 together in series, the switch control unit 131A turns the switch SW3 to a second state (where the common terminal T30 and the second terminal T32 are electrically conductive with each other) and turns the switch SW4 OFF. Thus, the first battery module E1 and the second battery module E2 are connected together in series between the positive electrode terminal 111A and negative electrode terminal 112A of the tool connecting section 11A. This increases the amount of power supplied (more specifically, the voltage applied) to the electric power tool body 3 compared to a situation where the battery pack 10S alone supplies power to the electric power tool body 3.

### (Variations)

Next, variations of the battery unit 1A according to the second embodiment will be described.

### (First variation)

In the example described above, the switch control unit 131A is configured to change the mode of connection between the first battery module E1 and the second battery module E2 from series connection to parallel connection, and vice versa, in accordance with a control signal from the electric power tool body 3. However, this is only an example and should not be construed as limiting.

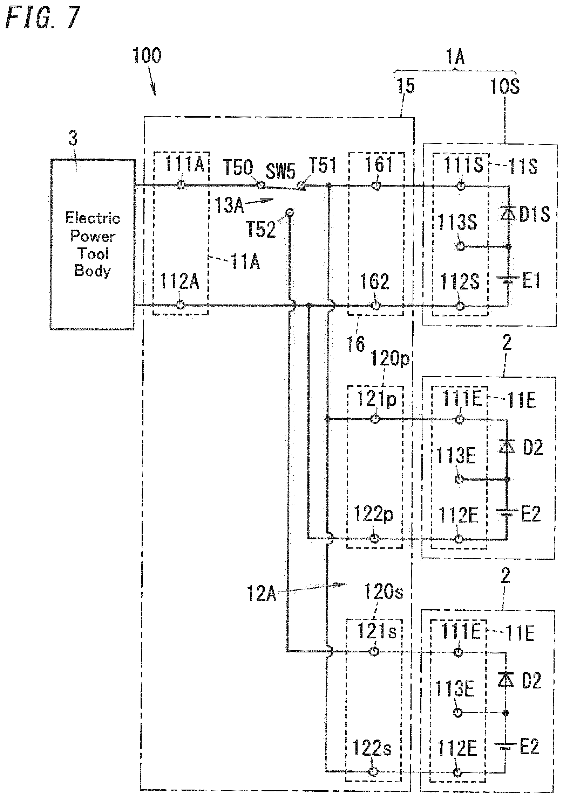

As shown in FIG. 7, the battery connecting section 12A of the adapter 15 according to the first variation includes a parallel connection section 120p and a series connection section 120s. This variation falls within the scope of the invention.

The parallel connection section 120p includes a positive electrode input terminal 121p and a negative electrode input terminal 122p. In the parallel connection section 120p, the positive electrode input terminal 121p is electrically connected to the positive electrode input terminal 161 of the battery pack connecting section 16 and the negative electrode input terminal 122p is electrically connected to the negative electrode input terminal 162 of the battery pack connecting section 16.

The series connection section 120s includes a positive electrode input terminal 121s and a negative electrode input terminal 122s. In the series connection section 120s, the positive electrode input terminal 121s is electrically connected to the positive electrode terminal 111A of the tool connecting section 11A via the connection circuit 13A (switch SW5) and the negative electrode input terminal 122s is electrically connected to the positive electrode input terminal 161 of the battery pack connecting section 16.

The switch SW5 is a c-contact switch and includes a common terminal T50, a first terminal T51, and a second terminal T52. The common terminal T50 is electrically connected to the positive electrode terminal 111A of the tool connecting section 11A. The first terminal T51 is electrically connected to the positive electrode input terminal 161 of the battery pack connecting section 16 and the positive electrode input terminal 121p of the parallel connection section 120p. The second terminal T52 is electrically connected to the positive electrode input terminal 121s of the series connection section 120s.

When the common terminal T50 and first terminal T51 of the switch SW5 are electrically connected together, the first battery module E1 of the battery pack 10S and the second battery module E2 of the additional battery 2 attached to the parallel connection section 120p are connected together in parallel. On the other hand, when the common terminal T50 and second terminal T52 of the switch SW5 are electrically connected together, the first battery module E1 of the battery pack 10S and the second battery module E2 of the additional battery 2 attached to the series connection section 120s are connected together in series.

The switch SW5 is configured to change the mode of connection mechanically depending on whether the additional battery 2 is attached to the parallel connection section 120p or the series connection section 120s. Specifically, when the additional battery 2 is attached to the parallel connection section 120p, the switch SW5 electrically connects the common terminal T50 to the first terminal T51. On the other hand, when the additional battery 2 is attached to the series connection section 120s, the switch SW5 electrically connects the common terminal T50 to the second terminal T52. Note that the switch SW5 may be configured to have its mode of connection switched by the switch control unit 131A as in the example described above.

### (Second variation)

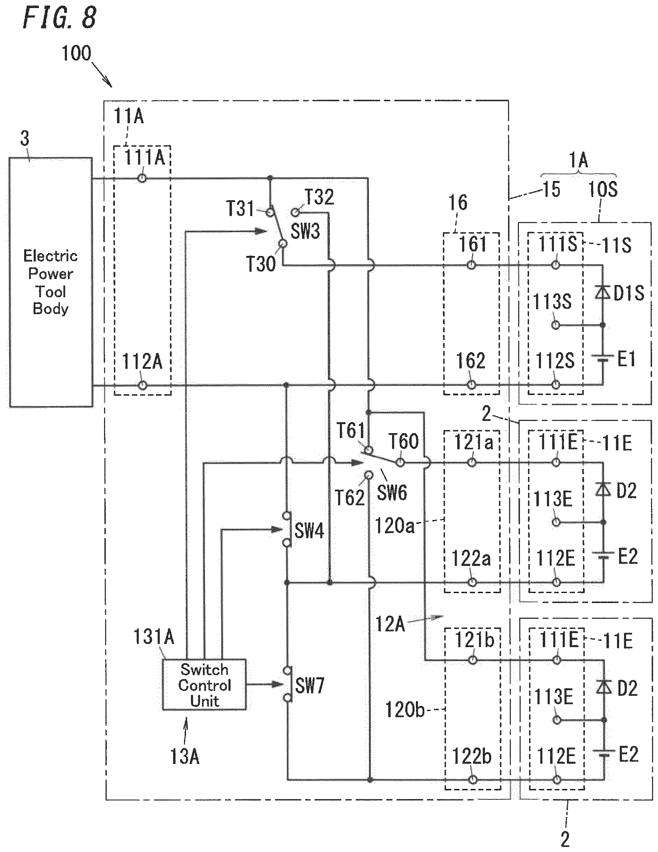

The battery connecting section 12A of the adapter 15 may be configured to receive a plurality of additional batteries 2 connected thereto as shown in FIG. 8. In the example illustrated in FIG. 8, the battery connecting section 12A includes a first connection section 120a and a second connection section 120b and is configured to receive two additional batteries 2 connected thereto This variation does not fall within the scope of the invention, but is included in this description because of illustrative purposes.

The first connection section 120a includes a positive electrode input terminal 121a and a negative electrode input terminal 122a. The second connection section 120b includes a positive electrode input terminal 121b and a negative electrode input terminal 122b.

The connection circuit 13A includes the switch SW3, the switch SW4, a switch SW6, and a switch SW7.

The switch SW6 is a c-contact switch and includes a common terminal T60, a first terminal T61, and a second terminal T62. The common terminal T60 is electrically connected to the positive electrode input terminal 121a of the first connection section 120a. The first terminal T61 is electrically connected to the positive electrode terminal 111A of the tool connecting section 11A. The second terminal T62 is electrically connected to the negative electrode input terminal 122b of the second connection section 120b.

The switch SW7 has one terminal thereof electrically connected to the negative electrode input terminal 122a of the first connection section 120a and the other terminal thereof electrically connected to the negative electrode input terminal 122b of the second connection section 120b.

To connect the first battery module E1 and the two second battery modules E2 together in parallel, the switch control unit 131A turns the switch SW3 to a first state (where the common terminal T30 and the first terminal T31 are electrically conductive with each other) and turns the switch SW4 ON. In addition, the switch control unit 131A turns the switch SW6 to a first state (where the common terminal T60 and the first terminal T61 are electrically conductive with each other) and turns the switch SW7 ON. This makes the first battery module E1 and the two second battery modules E2 connected together in parallel. This increases the amount of power supplied to the electric power tool body 3 compared to a situation where the battery pack 10S alone supplies power to the electric power tool body 3, thus extending the operating duration of the electric power tool body 3. In addition, connecting the first battery module E1 and second battery modules E2 together in parallel increases the amount of current supplied to the electric power tool body 3, compared to a situation where the battery pack 10S alone supplies power to the electric power tool body 3.

On the other hand, to connect the first battery module E1 and the two second battery modules E2 together in series, the switch control unit 131A turns the switch SW3 to a second state (where the common terminal T30 and the second terminal T32 are electrically conductive with each other) and turns the switch SW4 OFF. In addition, the switch control unit 131A turns the switch SW6 to a second state (where the common terminal T60 and the second terminal T62 are electrically conductive with each other) and turns the switch SW7 OFF. This makes the first battery module E1 and the two second battery module E2 connected together in series. This increases the amount of power supplied (more specifically, the voltage applied) to the electric power tool body 3 compared to a situation where the battery pack 10S alone supplies power to the electric power tool body 3.

### (Advantages of the invention)

The battery unit according to the invention allows, when the additional battery (2) is attached, the first battery module (E1) and the second battery module (E2) to be both electrically connected to the electric power tool body (3), thus making the amount of power supplied to the electric power tool body (3) adjustable.

The battery unit according to the invention increases the amount of current supplied, or the voltage applied, to the electric power tool body (3).

The battery unit according to the invention allows the additional battery (2) attachable to the electric power tool body (3) to be attached to the battery unit (1, 1A), thus making this battery unit (1, 1A) even more user-friendly.

The battery unit according to the invention allows the combined output power of the first battery module (E1) and the plurality of second battery modules (E2) to be supplied to the electric power tool body (3), thus making the amount of power supplied to the electric power tool body (3) adjustable.

The battery unit according to the invention reduces the chances of an overcurrent flowing between the first battery module (E1) and the second battery module (E2).

The battery unit according to the invention reduces the chances of the first battery module (E1) and the second battery module (E2) being connected together inappropriately.

The battery unit according to the invention allows the additional battery (2) to be attached to a battery pack with the ability to supply power by itself to the electric power tool body (3).

The battery unit according to the invention allows the first battery module (E1) and the second battery module (E2) to be electrically connected to the electric power tool body (3) via the adapter (15).

The adapter according to the invention allows the first battery module (E1) and the second battery module (E2) to be both electrically connected to the electric power tool body (3), thus making the amount of power supplied to the electric power tool body (3) adjustable.

The electric power tool system according to the invention makes the amount of power supplied to the electric power tool body (3) adjustable.

The battery charger system according to the invention. allows the first battery module (E1) to be charged.

### Reference Signs List

- 1, 1A: Battery Unit
- 10S: Battery Pack
- 11, 11A: Tool Connecting Section
- 12, 12A: Battery Connecting Section
- 13, 13A: Connection Circuit
- 131: Switch Control Unit (Decision Unit)
- 14, 14A: Protection Circuit
- 15: Adapter
- 16: Battery Pack Connecting Section
- 100: Electric Power Tool System
- 101: Housing
- 2: Additional Battery
- 3: Electric Power Tool Body
- 4: Charger
- 400: Battery Charger System
- E1: First Battery Module
- E2: Second Battery Module

## Claims

1. A battery unit (1A) configured to be removably attached to an electric power tool body (3), the battery unit (1A) comprising:
a battery pack (10S) including a first battery module (E1) and an adapter (15); the adapter (15) comprising:
- a tool connecting section (11A) configured to be electrically connected to the electric power tool body (3) and including a positive electrode terminal (111A) and a negative electrode terminal (112A);
- a battery connecting section (12A) configured to be electrically connected to an additional battery (2), including a second battery module (E2);
- a connection circuit (13A) configured to electrically connect the first battery module (E1) and the second battery module (E2) either electrically in series, or electrically in parallel, to each other, with respect to the tool connecting section (11A);
- a battery pack connecting section (16) to which the battery pack (10S) is configured to be electrically connected; and
- a switch (SW5) which is a c-contact switch including a common terminal (T50), a first terminal (T51), and a second terminal (T52), **characterized in that**,
the battery connecting section (12A) includes
a parallel connection section (120p) which has a positive electrode input terminal (121p) and a negative electrode input terminal (122p) and
a series connection section (120s) which has a positive electrode input terminal (121s) and a negative electrode input terminal (122s),
the battery pack connecting section (16) includes a positive electrode input terminal (161) and a negative electrode input terminal (162),
the common terminal (T50) is electrically connected to the positive electrode terminal (111A) of the tool connecting section (11A),
the first terminal (T51) is electrically connected to the positive electrode input terminal (161) of the battery pack connecting section (16) and the positive electrode input terminal (121p) of the parallel connection section (120p),
the second terminal (T52) is electrically connected to the positive electrode input terminal (121s) of the series connection section (120s),
the negative electrode input terminal (122p) is electrically connected to the negative electrode input terminal (162) of the battery pack connecting section (16),
the negative electrode input terminal (122s) is electrically connected to the positive electrode input terminal (161) of the battery pack connecting section (16),
the negative electrode terminal (112A) is electrically connected to the negative electrode input terminal (162) of the battery pack connecting section (16),
the common terminal (T50) and the first terminal (T51) of the switch (SW5) are arranged so that, when they are electrically connected together, the first battery module (E1) and the second battery module (E2) of the additional battery (2) attached to the parallel connection section (120p) are connected together in parallel, and
the common terminal (T50) and the second terminal (T52) of the switch (SW5) are arranged so that, when they are electrically connected together, the first battery module (E1) and the second battery module (E2) of the additional battery (2) attached to the series connection section (120s) are connected together in series.

2. The battery unit (1A) of claim 1, wherein
the connection circuit (13A) is configured to change a mode of connection between the first battery module (E1) and the second battery module (E2) from series to parallel, and parallel to series.

3. The battery unit (1A) of any one of claims 1 or 2, wherein
the battery connecting section (12A) is configured to receive a plurality of the additional batteries (2) connected thereto.

4. The battery unit (1A) of any one of claims 1 to 3, further comprising a protection circuit (14A) configured to reduce the chances of an overcurrent flowing between the first battery module (E1) and the second battery module (E2).

5. The battery unit (1A) of any one of claims 1 to 4, further comprising a decision unit (131A) configured to determine, based on information about respective voltages of the first battery module (E1) and the second battery module (E2), whether or not the first battery module (E1) and the second battery module (E2) are to be electrically connected to each other.

6. The battery unit (1A) of any one of claims 1 to 5, further comprising a housing (101) configured to house the first battery module (E1) and the housing (101) including the tool connecting section (11A) and the battery connecting section (12A).

7. An adapter (15) comprising:
a tool connecting section (11A) configured to be electrically connected to an electric power tool body (3) and including a positive electrode terminal (111A) and a negative electrode terminal (112A);
a connection circuit ( 13A) configured to electrically connect a first battery module (E1) and a second battery module (E2) either electrically in series, or electrically in parallel, to each other, with respect to the tool connecting section (11A);
a battery connecting section (12A) configured to be electrically connected to an additional battery (2), including the second battery module (E2);
a battery pack connecting section (16) configured to be electrically connected to a battery pack (10S), including the first battery module (E1); and
a switch (SW5) which is a c-contact switch including a common terminal (T50), a first terminal (T51), and a second terminal (T52), **characterized in that**,
the battery connecting section (12A) includes
a parallel connection section (120p) which has a positive electrode input terminal (121p) and a negative electrode input terminal (122p) and
a series connection section (120s) which has a positive electrode input terminal (121s) and a negative electrode input terminal (122s),
the battery pack connecting section (16) includes a positive electrode input terminal (161) and a negative electrode input terminal (162),
the common terminal (T50) is electrically connected to the positive electrode terminal (111A) of the tool connecting section (11A),
the first terminal (T51) is electrically connected to the positive electrode input terminal (161) of the battery pack connecting section (16) and the positive electrode input terminal (121p) of the parallel connection section (120p),
the second terminal (T52) is electrically connected to the positive electrode input terminal (121s) of the series connection section (120s),
the negative electrode input terminal (122p) is electrically connected to the negative electrode input terminal (162) of the battery pack connecting section (16),
the negative electrode input terminal (122s) is electrically connected to the positive electrode input terminal (161) of the battery pack connecting section (16),
the negative electrode terminal (112A) is electrically connected to the negative electrode input terminal (162) of the battery pack connecting section (16),
the common terminal (T50) and the first terminal (T51) of the switch (SW5) are arranged so that, when they are electrically connected together, the first battery module (E1) and the second battery module (E2) of the additional battery (2) attached to the parallel connection section (120p) are connected together in parallel, and
the common terminal (T50) and the second terminal (T52) of the switch (SW5) are arranged so that, when they are electrically connected together, the first battery module (E1) and the second battery module (E2) of the additional battery (2) attached to the series connection section (120s) are connected together in series.

8. An electric power tool system (100) comprising:
the battery unit (1A) of any one of claims 1 to 6; and
the electric power tool body (3).

9. A battery charger system (400) comprising:
the battery unit (1A) of any one of claims 1 to 6; and
a charger (4) configured to charge the first battery module (E1).

## Patentansprüche

1. Batterieeinheit (1A), die konfiguriert ist, um entfernbar an einem Elektrowerkzeugkörper (3) angebracht zu werden, wobei die Batterieeinheit (1A) aufweist:
einen Batteriepack (10S), der ein erstes Batteriemodul (E1) und einen Adapter (15) aufweist; wobei der Adapter (15) aufweist:
einen Werkzeugverbindungsabschnitt (11A), der konfiguriert ist, um elektrisch mit dem Elektrowerkzeugkörper (3) verbunden zu werden, und der einen positiven Elektrodenanschluss (111A) und einen negativen Elektrodenanschluss (112A) aufweist;
einen Batterieverbindungsabschnitt (12A), der konfiguriert ist, um elektrisch mit einer zusätzlichen Batterie (2) verbunden zu werden, die ein zweites Batteriemodul (E2) aufweist;
eine Verbindungsschaltung (13A), die konfiguriert ist, um das erste Batteriemodul (E1) und das zweite Batteriemodul (E2) entweder elektrisch in Reihe oder elektrisch parallel elektrisch miteinander in Bezug auf den Werkzeugverbindungsabschnitt (11A) zu verbinden;
einen Batteriepackverbindungsabschnitt (16), in Bezug auf welchen der Batteriepack (10S) konfiguriert ist, elektrisch mit diesem verbunden zu werden; und
einen Schalter (SW5), welcher ein C-Kontakt-Schalter einschließlich eines gemeinsamen Anschlusses (T50), eines ersten Anschlusses (T51) und eines zweiten Anschlusses (T52) ist,
**dadurch gekennzeichnet, dass** der Batterieverbindungsabschnitt (12A) aufweist:
einen Parallelverbindungsabschnitt (120p), welcher einen positiven Elektrodeneingangsanschluss (121p) und einen negativen Elektrodeneingangsanschluss (122p) aufweist, und
einen Reihenverbindungsabschnitt (120s), welcher einen positiven Elektrodeneingangsanschluss (121s) und einen negativen Elektrodeneingangsanschluss (122s) aufweist,
wobei der Batteriepackverbindungsabschnitt (16) einen positiven Elektrodeneingangsanschluss (161) und einen negativen Elektrodeneingangsanschluss (162) aufweist,
der gemeinsame Anschluss (T50) elektrisch mit dem positiven Elektrodenanschluss (11A) des Werkzeugverbindungsabschnitts (11A) verbunden ist,
der erste Anschluss (T51) elektrisch mit dem positiven Elektrodeneingangsanschluss (161) des Batteriepackverbindungsabschnitts (16) und dem positiven Elektrodeneingangsanschluss (121p) des Parallelverbindungsabschnitts (120p) verbunden ist,
der zweite Anschluss (T52) elektrisch mit dem positiven Elektrodeneingangsanschluss (121s) des Reihenverbindungsabschnitts (120s) verbunden ist,
der negative Elektrodeneingangsanschluss (122p) elektrisch mit dem negativen Elektrodeneingangsanschluss (162) des Batteriepackverbindungsabschnitts (16) verbunden ist,
der negative Elektrodeneingangsanschluss (122s) elektrisch mit dem positiven Elektrodeneingangsanschluss (161) des Batteriepackverbindungsabschnitts (16) verbunden ist,
der negative Elektrodenanschluss (112A) elektrisch mit dem negativen Elektrodeneingangsanschluss (162) des Batteriepackverbindungsabschnitts (16) verbunden ist,
der gemeinsame Anschluss (T50) und der erste Anschluss (T51) des Schalters (SW5) so angeordnet sind, dass, wenn sie elektrisch miteinander verbunden sind, das erste Batteriemodul (E1) und das zweite Batteriemodul (E2) der zusätzlichen Batterie (2), die an dem Parallelverbindungsabschnitt (120p) angebracht sind, parallel miteinander geschaltet sind, und der gemeinsame Anschluss (T50) und der zweite Anschluss (T52) des Schalters (SW5) so angeordnet sind, dass, wenn sie elektrisch miteinander verbunden sind, das erste Batteriemodul (E1) und das zweite Batteriemodul (E2) der zusätzlichen Batterie (2), die an dem Reihenverbindungsabschnitt (120s) angebracht sind, in Reihe miteinander geschaltet sind.

2. Batterieeinheit (1A) nach Anspruch 1, wobei
die Verbindungsschaltung (13A) konfiguriert ist, um einen Verbindungsmodus zwischen dem ersten Batteriemodul (E1) und dem zweiten Batteriemodul (E2) von Reihe auf Parallel und von Parallel auf Reihe zu ändern.

3. Batterieeinheit (1A) nach einem der Ansprüche 1 oder 2, wobei der Batterieverbindungsabschnitt (12A) konfiguriert ist, um eine Vielzahl der zusätzlichen Batterien (2) aufzunehmen, die mit diesem verbunden sind.

4. Batterieeinheit (1A) nach einem der Ansprüche 1 bis 3, ferner umfassend eine Schutzschaltung (14A), die konfiguriert ist, um die Wahrscheinlichkeit, dass ein Überstrom zwischen dem ersten Batteriemodul (E1) und dem zweiten Batteriemodul (E2) fließt, zu verringern.

5. Batterieeinheit (1A) nach einem der Ansprüche 1 bis 4, ferner umfassend eine Entscheidungseinheit (131A), die konfiguriert ist, um basierend auf Informationen über jeweilige Spannungen des ersten Batteriemoduls (E1) und des zweiten Batteriemoduls (E2) zu bestimmen, ob das erste Batteriemodul (E1) und das zweite Batteriemodul (E2) elektrisch miteinander verbunden werden sollen oder nicht.

6. Batterieeinheit (1A) nach einem der Ansprüche 1 bis 5, ferner umfassend ein Gehäuse (101), das konfiguriert ist, um das erste Batteriemodul (E1) aufzunehmen, und wobei das Gehäuse (101) den Werkzeugverbindungsabschnitt (11A) und den Batterieverbindungsabschnitt (12A) aufnimmt.

7. Adapter (15), aufweisend:
einen Werkzeugverbindungsabschnitt (11A), der konfiguriert ist, um elektrisch mit einem Elektrowerkzeugkörper (3) verbunden zu werden, und der einen positiven Elektrodenanschluss (111A) und einen negativen Elektrodenanschluss (112A) aufweist;
eine Verbindungsschaltung (13A), die konfiguriert ist, um ein erstes Batteriemodul (E1) und ein zweites Batteriemodul (E2) entweder elektrisch in Reihe oder elektrisch parallel miteinander in Bezug auf den Werkzeugverbindungsabschnitt (11A) elektrisch zu verbinden;
einen Batterieverbindungsabschnitt (12A), der konfiguriert ist, um elektrisch mit einer zusätzlichen Batterie (2) verbunden zu werden, die das zweite Batteriemodul (E2) aufweist;
einen Batteriepackverbindungsabschnitt (16), der konfiguriert ist, um elektrisch mit einem Batteriepack (10S) verbunden zu werden, der das erste Batteriemodul (E1) aufweist; und
einen Schalter (SW5), welcher ein C-Kontaktschalter ist, der einen gemeinsamen Anschluss (T50), einen ersten Anschluss (T51) und einen zweiten Anschluss (T52) aufweist,
**dadurch gekennzeichnet, dass**
der Batterieverbindungsabschnitt (12A) aufweist:
einen Parallelverbindungsabschnitt (120p), welcher einen positiven Elektrodeneingangsanschluss (121p) und einen negativen Elektrodeneingangsanschluss (122p) aufweist, und
einen Reihenverbindungsabschnitt (120s), welcher einen positiven Elektrodeneingangsanschluss (121s) und einen negativen Elektrodeneingangsanschluss (122s) aufweist,
der Batteriepackverbindungsabschnitt (16) einen positiven Elektrodeneingangsanschluss (161) und einen negativen Elektrodeneingangsanschluss (162) aufweist,
der gemeinsame Anschluss (T50) elektrisch mit dem positiven Elektrodenanschluss (111A) des Werkzeugverbindungsabschnitts (11A) verbunden ist,
der erste Anschluss (T51) elektrisch mit dem positiven Elektrodeneingangsanschluss (161) des Batteriepackverbindungsabschnitts (16) und dem positiven Elektrodeneingangsanschluss (121p) des Parallelverbindungsabschnitts (120p) verbunden ist,
der zweite Anschluss (T52) elektrisch mit dem positiven Elektrodeneingangsanschluss (121s) des Reihenverbindungsabschnitts (120s) verbunden ist,
der negative Elektrodeneingangsanschluss (122p) elektrisch mit dem negativen Elektrodeneingangsanschluss (162) des Batteriepackverbindungsabschnitts (16) verbunden ist,
der negative Elektrodeneingangsanschluss (122s) elektrisch mit dem positiven Elektrodeneingangsanschluss (161) des Batteriepackverbindungsabschnitts (16) verbunden ist,
der negative Elektrodenanschluss (112A) elektrisch mit dem negativen Elektrodeneingangsanschluss (162) des Batteriepackverbindungsabschnitts (16) verbunden ist,
der gemeinsame Anschluss (T50) und der erste Anschluss (T51) des Schalters (SW5) so angeordnet sind, dass, wenn sie elektrisch miteinander verbunden sind, das erste Batteriemodul (E1) und das zweite Batteriemodul (E2) der zusätzlichen Batterie (2), die an dem Parallelverbindungsabschnitt (120p) angebracht sind, parallel miteinander verbunden sind, und
der gemeinsame Anschluss (T50) und der zweite Anschluss (T52) des Schalters (SW5) so angeordnet sind, dass, wenn sie elektrisch miteinander verbunden sind, das erste Batteriemodul (E1) und das zweite Batteriemodul (E2) der zusätzlichen Batterie (2), die an dem Reihenverbindungsabschnitt (120s) angebracht sind, in Reihe miteinander verbunden sind.

8. Elektrowerkzeugsystem (100), aufweisend:
die Batterieeinheit (1A) nach einem der Ansprüche 1 bis 6; und
den Elektrowerkzeugkörper (3).

9. Batterieladesystem (400), aufweisend:
die Batterieeinheit (1A) nach einem der Ansprüche 1 bis 6; und
ein Ladegerät (4), das konfiguriert ist, um das erste Batteriemodul (E1) zu laden.

## Revendications

1. Unité de batterie (1A) configurée pour être fixée de manière amovible à un corps d'outil à alimentation électrique (3), l'unité de batterie (1A) comprenant :
un bloc-batterie (10S) comportant un premier module de batterie (E1) et un adaptateur (15) ; l'adaptateur (15) comprenant :
- une section de raccordement d'outil (11A) configurée pour être raccordée électriquement au corps d'outil à alimentation électrique (3) et comportant une borne d'électrode positive (111A) et une borne d'électrode négative (112A) ;
- une section de raccordement de batterie (12A) configurée pour être raccordée électriquement à une batterie supplémentaire (2), comportant un deuxième module de batterie (E2) ;
- un circuit de raccordement (13A) configuré pour raccorder électriquement le premier module de batterie (E1) et le deuxième module de batterie (E2) soit électriquement en série soit électriquement en parallèle l'un à l'autre par rapport à la section de raccordement d'outil (11A) ;
- une section de raccordement de bloc-batterie (16), le bloc-batterie (10S) étant configuré pour y être raccordé électriquement ; et
- un commutateur (SW5) qui est un commutateur de type C comportant une borne commune (T50), une première borne (T51) et une deuxième borne (T52),
**caractérisée en ce que**
la section de raccordement de batterie (12A) comporte une section de raccordement en parallèle (120p), qui présente une borne d'entrée d'électrode positive (121p) et une borne d'entrée d'électrode négative (122p), et
une section de raccordement en série (120s), qui présente une borne d'entrée d'électrode positive (121s) et une borne d'entrée d'électrode négative (122s),
la section de raccordement de bloc-batterie (16) comporte une borne d'entrée d'électrode positive (161) et une borne d'entrée d'électrode négative (162),
la borne commune (T50) est raccordée électriquement à la borne d'électrode positive (111A) de la section de raccordement d'outil (11A),
la première borne (T51) est raccordée électriquement à la borne d'entrée d'électrode positive (161) de la section de raccordement de bloc-batterie (16) et à la borne d'entrée d'électrode positive (121p) de la section de raccordement en parallèle (120p),
la deuxième borne (T52) est raccordée électriquement à la borne d'entrée d'électrode positive (121s) de la section de raccordement en série (120s),
la borne d'entrée d'électrode négative (122p) est raccordée électriquement à la borne d'entrée d'électrode négative (162) de la section de raccordement de bloc-batterie (16),
la borne d'entrée d'électrode négative (122s) est raccordée électriquement à la borne d'entrée d'électrode positive (161) de la section de raccordement de bloc-batterie (16),
la borne d'électrode négative (112A) est raccordée électriquement à la borne d'entrée d'électrode négative (162) de la section de raccordement de bloc-batterie (16),
la borne commune (T50) et la première borne (T51) du commutateur (SW5) sont disposées de telle sorte que lorsqu'elles sont raccordées électriquement l'une à l'autre, le premier module de batterie (E1) et le deuxième module de batterie (E2) de la batterie supplémentaire (2) fixée à la section de raccordement en parallèle (120p) sont raccordés l'un à l'autre en parallèle, et
la borne commune (T50) et la deuxième borne (T52) du commutateur (SW5) sont disposées de telle sorte que, lorsqu'elles sont raccordées électriquement l'une à l'autre, le premier module de batterie (E1) et le deuxième module de batterie (E2) de la batterie supplémentaire (2) fixée à la section de raccordement en série (120s) sont raccordés l'un à l'autre en série.

2. Unité de batterie (1A) selon la revendication 1, dans laquelle
le circuit de raccordement (13A) est configuré pour changer un mode de raccordement entre le premier module de batterie (E1) et le deuxième moule de batterie (E2) d'un raccordement en série à un raccordement en parallèle, et d'un raccordement en parallèle à un raccordement en série.

3. Unité de batterie (1A) selon l'une quelconque des revendications 1 ou 2, dans laquelle la section de raccordement de batterie (12A) est configurée pour recevoir une pluralité de batteries supplémentaires (2) raccordées à celle-ci.

4. Unité de batterie (1A) selon l'une quelconque des revendications 1 à 3, comprenant en outre un circuit de protection (14A) configuré pour réduire les risques d'un passage de surintensité entre le premier module de batterie (E1) et le deuxième module de batterie (E2).

5. Unité de batterie (1A) selon l'une quelconque des revendications 1 à 4, comprenant en outre une unité de décision (131A) configurée pour déterminer, sur la base d'informations concernant des tensions respectives du premier module de batterie (E1) et du deuxième module de batterie (E2), si le premier module de batterie (E1) et le deuxième module de batterie (E2) sont raccordés électriquement l'un à l'autre ou non.

6. Unité de batterie (1A) selon l'une quelconque des revendications 1 à 5, comprenant en outre un boîtier (101) configuré pour loger le premier module de batterie (E1) et le boîtier (101) comportant la section de raccordement d'outil (11A) et la section de raccordement de batterie (12A).

7. Adaptateur (15) comprenant :
une section de raccordement d'outil (11A) configurée pour être raccordée électriquement à un corps d'outil à alimentation électrique (3) et comportant une borne d'électrode positive (111A) et une borne d'électrode négative (112A) ;
un circuit de raccordement (13A) configuré pour raccorder électriquement un premier module de batterie (E1) et un deuxième module de batterie (E2) soit électriquement en série soit électriquement en parallèle l'un à l'autre par rapport à la section de raccordement d'outil (11A) ;
une section de raccordement de batterie (12A) configurée pour être raccordée électriquement à une batterie supplémentaire (2), comportant le deuxième module de batterie (E2) ;
une section de raccordement de bloc-batterie (16) configurée pour être raccordée électriquement à un bloc-batterie (10S), comportant le premier module de batterie (E1) ; et
un commutateur (SW5), qui est un commutateur de type C comportant une borne commune (T50), une première borne (T51) et une deuxième borne (T52),
**caractérisée en ce que**
la section de raccordement de batterie (12A) comporte
une section de raccordement en parallèle (120p) qui présente une borne d'entrée d'électrode positive (121p) et une borne d'entrée d'électrode négative (122p), et
une section de raccordement en série (120s) qui présente une borne d'entrée d'électrode positive (121s) et une borne d'entrée d'électrode négative (122s),
la section de raccordement de bloc-batterie (16) comporte une borne d'entrée d'électrode positive (161) et une borne d'entrée d'électrode négative (162),
la borne commune (T50) est raccordée électriquement à la borne d'électrode positive (111A) de la section de raccordement d'outil (11A),
la première borne (T51) est raccordée électriquement à la borne d'entrée d'électrode positive (161) de la section de raccordement de bloc-batterie (16) et à la borne d'entrée d'électrode positive (121p) de la section de raccordement en parallèle (120p),
la deuxième borne (T52) est raccordée électriquement à la borne d'entrée d'électrode positive (121s) de la section de raccordement en série (120s),
la borne d'entrée d'électrode négative (122p) est raccordée électriquement à la borne d'entrée d'électrode négative (162) de la section de raccordement de bloc-batterie (16),
la borne d'entrée d'électrode négative (122s) est raccordée électriquement à la borne d'entrée d'électrode positive (161) de la section de raccordement de bloc-batterie (16),
la borne d'électrode négative (112A) est raccordée électriquement à la borne d'entrée d'électrode négative (162) de la section de raccordement de bloc-batterie (16),
la borne commune (T50) et la première borne (T51) du commutateur (SW5) sont disposées de telle sorte que, lorsqu'elles sont raccordées électriquement l'une à l'autre, le premier module de batterie (E1) et le deuxième module de batterie (E2) de la batterie supplémentaire (2) fixée à la section de raccordement en parallèle (120p) sont raccordés l'un à l'autre en parallèle, et
la borne commune (T50) et la deuxième borne (T52) du commutateur (SW5) sont disposées de telle sorte que, lorsqu'elles sont raccordées électriquement l'une à l'autre, le premier module de batterie (E1) et le deuxième module de batterie (E2) de la batterie supplémentaire (2) fixée à la section de raccordement en série (120s) sont raccordés en série l'un à l'autre.

8. Système d'outil à alimentation électrique (100) comprenant :
l'unité de batterie (1A) selon l'une quelconque des revendications 1 à 6 ; et
le corps d'outil à alimentation électrique (3).

9. Système de chargeur de batterie (400) comprenant :
l'unité de batterie (1A) selon l'une quelconque des revendications 1 à 6 ; et
un chargeur (4) configuré pour charger le premier module de batterie (E1).
